(19) Europäisches Patentamt

European Patent Office

Office européen des brevets

(11) Veröffentlichungsnummer: **0 501 103 A1**

## (12) EUROPÄISCHE PATENTANMELDUNG

(21) Anmeldenummer: **92100089.9**

(22) Anmeldetag: **04.01.92**

(51) Int. Cl.5: **B28B 1/52**, D21J 1/00, D21J 3/00, C04B 28/02, C04B 28/22, C04B 16/02, C04B 18/08, C04B 14/04

(30) Priorität: **26.02.91 DE 4106010**

(43) Veröffentlichungstag der Anmeldung:
**02.09.92 Patentblatt 92/36**

(84) Benannte Vertragsstaaten:
**AT BE CH DE ES FR GB IT LI LU NL**

(71) Anmelder: **EURIT BAUELEMENTE GmbH**
**Adolf-Oesterheld-Strasse**
**W-8716 Dettelbach(DE)**

(72) Erfinder: **Sagstetter, Robert**
**Blumenstrasse 8**
**W-8711 Kleinlangheim(DE)**
Erfinder: **Bauer, Adolf**
**Am Silberbach 20**
**W-8719 Schwarzach/Main(DE)**

(74) Vertreter: **Sparing Röhl Henseler**
**Patentanwälte European Patent Attorneys**
**Rethelstrasse 123**
**W-4000 Düsseldorf 1(DE)**

(54) **Verfahren zur Herstellung von Calciumhydrosilikat-gebundenen Faserplatten.**

(57) Die Erfindung betrifft ein Verfahren zur Herstellung von Calciumhydrosilikatgebundenen Faserplatten, insbesondere Doppelbodenplatten, bei dem eine Faser-Bindemittel-Füllstoff-Mischung mit einem Wasseranteil von 40 bis 45 Gew.-% und einem Feststoffanteil von 55 bis 60 Gew.-% hergestellt wird, indem Cellulosefasern in einer Menge von 2 bis 12 Gew.-% des Feststoffanteils in einem Pulper (1) mit Wasser aufgeschlossen und mit dem in einem Trockenmischer (2) gemischten Bindemittel bestehend aus Zement und/oder Kalkhydrat und reaktive Calciumsilikate enthaltenden Stoffen sowie den Füllstoffen in einem Naßmischer (3) zu einer dickbreiigen Mischung vermischt werden, wonach die dickbreiige Mischung in einen Unterrahmen (4) einer Unterform (5) einer ferner eine Oberform (7) aufweisenden Einzeltaktpresse (6) in einer vorgegebenen Menge gegeben, im wesentlichen egalisiert, durch Zusammenfahren von Ober- und Unterform (5,7) geformt und über Entwässerungsgewebe und -kanäle der Ober- und Unterform (5,7) entwässert, verdichtet und entlüftet wird, wonach der so gebildete Plattenrohling nach dem Entformen in einem Autoklaven (9) autoklaviert wird.

Die Erfindung betrifft ein Verfahren zur Herstellung von Calciumhydrosilikat-gebundenen Faserplatten.

Bei zementgebundenen Faserplatten ist es bekannt, mit hohem Wasserüberschuß eine Schwemme enthaltend ein Gemisch aus Cellulosefasern und Zement auf ein Papiersieb aufzubringen, aus der dünne Lagen erzeugt werden, die in feuchtem Zustand übereinander angeordnet und dann miteinander verpreßt werden, um schließlich auf Maß geschnitten und autoklaviert zu werden. Durch die Verwendung eines Papiersiebs einer Papiermaschine ist die Dicke der einzelnen Lagen entsprechend begrenzt, die dadurch notwendige Schichtung führt dazu, daß u.U. Schichten mit unterschiedlichem Feuchtigkeitsgehalt übereinander angeordnet werden. Zwar kann diese Schichtung durch entsprechenden Versatz in einem gewissen Grad die Anisotropie der mechanischen Eigenschaften der Faserplatte, die in der jeweiligen Schicht durch die Verwendung von Wasser als Stofftransportmedium hervorgerufen wird, beseitigen, jedoch ist auch dies aufwendig. Die so hergestellten Plattenrohlinge neigen zudem infolge der Schichtung während des Autoklavierens zur "Schüsselung", d.h. zum schüsselartigen Verformen in den Randbereichen, wodurch die Produktqualität beeinträchtigt und ein Nacharbeiten notwendig wird.

Aufgabe der Erfindung ist es, ein Verfahren der eingangs genannten Art zu schaffen, gemäß dem in vereinfachter Weise Faserplatten mit gleichmäßiger und gleichbleibender Qualität herstellbar sind.

Die Erfindung betrifft daher ein Verfahren zur Herstellung von Calciumhydrosilikat-gebundenen Faserplatten, insbesondere Doppelbodenplatten, bei dem eine Faser-Bindemittel-Füllstoff-Mischung mit einem Wasseranteil von 40 bis 45 Gew.-% und einem Feststoffanteil von 55 bis 60 Gew.-% hergestellt wird, indem Cellulosefasern in einer Menge von 2 bis 12 Gew.-% des Feststoffanteils mit Wasser aufgeschlossen und mit dem Bindemittel bestehend aus Zement und/oder Kalkhydrat und reaktive Calciumsilikate enthaltenden Stoffen sowie den Füllstoffen zu einer dickbreiigen Mischung vermischt werden, wonach die dickbreiige Mischung in einen Unterrahmen einer Unterform einer ferner eine Oberform aufweisenden Einzeltaktpresse in einer vorgegebenen Menge gegeben, im wesentlichen egalisiert, durch Zusammenfahren von Ober- und Unterform geformt und über Entwässerungsgewebe und -kanäle der Ober- und Unterform entwässert, verdichtet und entlüftet wird, wonach der so gebildete Plattenrohling nach dem Entformen autoklaviert wird.

Hierbei reagiert der als Bindemittel eingesetzte Zement, z.B. Portland-, Eisenportland- oder Hochofenzement, bzw. dessen Kalkanteil oder der als Kalkhydrat eingesetzte freie Kalk mit reaktivem Calciumsilikat während des Autoklavierens unter Bildung von festigkeitsbildenden CsH-Phasen. Als reaktive Calciumsilikate kommen Mikrosilikat (insbesondere bei der Verwendung von Zement), feingemahlenes Quarzmehl, latenthydraulische Stoffe wie Puzzolane, etwa Flugaschen oder $SiO_2$-reiche Schlacken, infrage, die teilweise zusammen mit dem freien bzw. freiwerdenden Kalk reagieren und teilweise als oder auch zusätzlich als Füllstoffe dienen können. U.a. wirkt sich Flugasche, die bis zu 25 Gew.-% des Feststoffanteils zusetzbar ist, auf die Faser-Bindemittel-Füllstoff-Mischung insofern günstig aus, als sie den Wasseranspruch herabsetzt und die Mischung geschmeidiger macht.

Die Cellulosefasern werden bevorzugt in einer Menge von 4 bis 7 Gew.-% des Feststoffanteils der Mischung und bevorzugt als Sulfatcellulose und gegebenenfalls zusätzlich mit anderen zur Armierung dienenden Fasern eingesetzt.

Zweckmäßigerweise wird der Feststoffanteil der Mischung teilweise oder ganz aus 2 bis 12 Gew.-%, insbesondere 4 bis 7 Gew.-% Cellulosefasern, 2 bis 12 Gew.-%, insbesondere 6 bis 10 Gew.-% Mikrosilika und bis 25 Gew.-%, insbesondere 10 bis 20 Gew.-% latenthydraulische Stoffe, insbesondere Flugasche, hergestellt.

Die Erfindung wird nachstehend weiter anhand eines beigefügten, den Verfahrensablauf darstellenden Diagramms erläutert.

Die Cellulosefasern, bei denen es sich um Papier- und/oder Zellstoffasern gegebenenfalls mit einem Anteil von zerkleinertem Altpapier handeln kann, werden in einem Pulper 1 aufgeschlossen, während gleichzeitig die überigen Feststoffkomponenten in einem Trockenmischer 2 gemischt werden. Die Pulpe aus dem Pulper 1 und die Trockenmischung aus dem Trockenmischer 2 werden in einem Naßmischer 3 zu einer dickbreiigen Mischung gemischt, der gegebenenfalls noch ein flüssiger Erstarrungsbeschleuniger für den Zement, falls die Mischung Zement enthält, zugesetzt werden kann.

Die dickbreiige Mischung wird in der notwendigen Menge, die gravimetrisch oder volumentrisch abgemessen werden kann, auf eine von einem Unterrahmen 4 umgebene Unterform 5 einer Einzeltaktpresse 6 gegeben. Die Mischung, die zunächst ein Haufwerk mit geringem Ausbreitmaß bildet, wird in dem Unterrahmen 4 im wesentlichen egalisiert. Dies kann beispielsweise durch Rütteln, Rakeln oder durch Auseinanderdrücken mittels eines Ausbreitstempels geschehen. Da die Mischung dickbreiig ist, würde diese sonst in der Einzeltaktpresse 6 nicht genügend über die vom Unterrahmen 4 begrenzte Fläche verteilt, so daß sich die Qualität mindernde Dickenschwankungen ergeben würden, die außerdem gegebenenfalls ein aufwendiges Nacharbeiten notwendig machen würden.

Durch das Egalisieren erhält man dagegen Faserplatten gleichmäßiger, gleichbleibender Qualität.

Nach dem Egalisieren wird die Mischung in der Einzeltaktpresse 6 durch Zusammenpressen von Oberform 7 und Unterform 5 zur Faserplatte mit entsprechenden Abmessungen, die durch den Unterrahmen 4 bestimmt werden, geformt. Gleichzeitig erfolgt ein Entwässern der Mischung, wobei durch die Fasern ein Entwässerungsvlies gebildet wird. Zu diesem Zweck sind Ober- und Unterform 7, 5 jeweils mit einem Entwässerungsgewebe und -kanälen versehen, wobei zwischen Entwässerungsgewebe und Ober- bzw. Unterform 7, 5 ein Drahtgeflecht zweckmäßigerweise angeordnet ist, um ein Eindrücken des Entwässerungsgewebes in die Öffnungen der Entwässerungskanäle zu verhindern. Die Oberform 7 ist zweckmäßigerweise innerhalb eines selbst auf- und abbeweglichen Oberrahmens 8 auf- und abbeweglich, der beim Verpressen mit dem Unterrahmen 4 dicht in Eingriff steht und nach dem Bilden des Faserplattenrohlings diesen zurückhält, um ihn auf eine Überführungseinrichtung zum Überführen von Rohlingen in einen Autoklaven 9 abzusetzen. Die so in einem Arbeitsgang hergestellten Rohlinge werden dann zur Erzeugung der festigkeitsbildenden Reaktionen, d.h. vor allem zur Bildung von CsH-Phasen, autoklaviert. Gegebenenfalls ist anschließend noch ein geringfügiges Schleifen als Nacharbeit notwendig.

Die Dicke der Faserplatten wird durch die Menge an Mischung, die in den Unterrahmen 4 eingefüllt wird, - gleichbleibenden Preßdruck vorausgesetzt - bestimmt. Die Preßdrücke liegen in der Größenordnung von 50 kp/cm$^2$.

Vor jedem Preßvorgang werden die mit der Mischung in Kontakt gelangenden Teile der Presse 6 mit Trennmittel besprüht, um Anbackungen zu vermeiden.

Die Ausbildung einer Anisotropie wird hierdurch ebenso vermieden wie ein mehrlagiger Aufbau oder ein Schneiden von Rohlingen auf Maß oder die Neigung zur "Schüsselung". Auch ist die Menge des aus der Mischung zu entfernenden Wassers wesentlich vermindert.

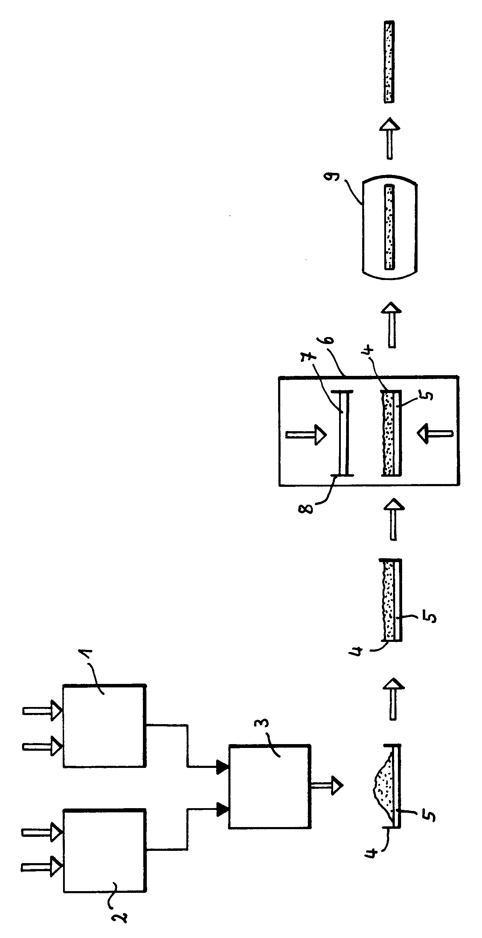

**Patentansprüche**

1. Verfahren zur Herstellung von Calciumhydrosilikat-gebundenen Faserplatten, insbesondere Doppelbodenplatten, bei dem eine Faser-Bindemittel-Füllstoff-Mischung mit einem Wasseranteil von 40 bis 45 Gew.-% und einem Feststoffanteil von 55 bis 60 Gew.-% hergestellt wird, indem Cellulosefasern in einer Menge von 2 bis 12 Gew.-% des Feststoffanteils mit Wasser aufgeschlossen und mit dem Bindemittel bestehend aus Zement und/oder Kalkhydrat und reaktive Calciumsilikate enthaltenden Stoffen sowie den Füllstoffen zu einer dickbreiigen Mischung vermischt werden, wonach die dickbreiige Mischung in einen Unterrahmen einer Unterform einer ferner eine Oberform aufweisenden Einzeltaktpresse in einer vorgegebenen Menge gegeben, im wesentlichen egalisiert, durch Zusammenfahren von Ober- und Unterform geformt und über Entwässerungsgewebe und -kanäle der Ober- und Unterform entwässert, verdichtet und entlüftet wird, wonach der so gebildete Plattenrohling nach dem Entformen autoklaviert wird.

2. Verfahren nach Anspruch 1, dadurch gekennzeichnet, daß 4 bis 7 Gew.-% des Feststoffanteils als Cellulosefasern eingesetzt werden.

3. Verfahren nach Anspruch 1 oder 2, dadurch gekennzeichnet, daß als Zement Portland-, Eisenportland- und/oder Hochofenzement eingesetzt wird.

4. Verfahren nach einem der Ansprüche 1 bis 3, dadurch gekennzeichnet, daß der Feststoffanteil neben 2 bis 12 Gew.-% Cellulosefasern teilweise oder ganz 2 bis 12 Gew.-%, insbesondere 6 bis 10 Gew.-% Mikrosilica und 0 bis 25 Gew.-%, insbesondere 10 bis 20 Gew.-% latenthydraulische Stoffe, vorzugsweise puzzolanische Stoffe, insbesondere Flugasche, Rest Zement umfaßt.

5. Verfahren nach einem der Ansprüche 1 bis 4, dadurch gekennzeichnet, daß der Mischung ein flüssiger Erhärtungsbeschleuniger für den Zement zugemischt wird.

6. Verfahren nach einem der Ansprüche 1 bis 5, dadurch gekennzeichnet, daß feingemahlenes Quarzmehl gegebenenfalls zusammen mit Flugasche und/oder SiO$_2$-reichen Schlacken als Reaktionspartner für Kalkhydrat und als Füllstoff verwendet wird.

7. Verfahren nach einem der Ansprüche 1 bis 6, dadurch gekennzeichnet, daß das Egalisieren durch Rütteln, Rakeln oder durch Ausbreiten mittels eines Stempels vorgenommen wird.

8. Verfahren nach einem der Ansprüche 1 bis 7, dadurch gekennzeichnet, daß der Unterrahmen und die Entwässerungsgewebe der Einzeltaktpresse jeweils mit einem Trennmittel besprüht werden.

9. Verfahren nach einem der Ansprüche 1 bis 8, dadurch gekennzeichnet, daß als Cellulosefasern Papier- und/oder Zellstofffasern verwendet

werden und teilweise zerkleinertes Altpapier umfassen können.

10. Verfahren nach einem der Ansprüche 1 bis 9, dadurch gekennzeichnet, daß die Feststoffe abgesehen von den Cellulosefasern trocken vorgemischt und der aus den Cellulosefasern gebildete Pulpe zugemischt werden.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 381 847 (FULGURIT BAUSTOFFE GMBH) <br> * das ganze Dokument * <br> --- | 1-3,9 | B28B1/52 <br> D21J1/00 <br> D21J3/0D |
| Y | WORLD PATENTS INDEX <br> Section Ch, Week 3576, <br> Derwent Publications Ltd., London, GB; <br> Class L, AN 76-65625X <br> & JP-A-51 D80 326 (MITSUBISHI CEMENT) <br> * Zusammenfassung * <br> --- | 1-3,9 | C04B28/02 <br> C04B28/22 <br> C04B16/02 <br> C04B18/08 <br> C04B14/04 |
| A | GB-A-607 854 (G.S. MANN) <br> * Seite 1, Zeile 52 - Zeile 69 * <br> --- | 1 | |
| A | US-A-4 406 703 (B.M. GUTHRIE ET AL.) <br> * das ganze Dokument * <br> --- | 1-3,5 | |
| A | DE-A-3 330 124 (M.H. SIMATUPANG) <br> * Zusammenfassung * <br> --- | 1,4,6 | |
| A | WO-A-8 600 881 (L. HUNKELER) <br> --- | | RECHERCHIERTE SACHGEBIETE (Int. Cl.5) |
| A | EP-A-0 103 195 (K.-H. ARHELDER) <br><br> ----- | | D21J <br> B28B <br> C04B |

Der vorliegende Recherchenbericht wurde für alle Patentansprüche erstellt

| Recherchenort | Abschlußdatum der Recherche | Prüfer |
|---|---|---|
| DEN HAAG | 12 JUNI 1992 | HAEUSLER F.U. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
........................................................
& : Mitglied der gleichen Patentfamilie, übereinstimmendes
    Dokument

EPO FORM 1503 03.82 (P0403)